# FASCICULE DE BREVET EUROPEEN

(11) **EP 3 041 636 B1**
(45) Date de publication et mention de la délivrance du brevet: **01.11.2017**
(21) Numéro de dépôt: 14777715.5
(22) Date de dépôt: 05.09.2014
(51) Int. Cl.: B23K 20/12, F16L 23/00

(54) **PROCEDE DE REALISATION PAR FRICTION MALAXAGE D'UNE BRIDE BI-COMPOSANT POUR ENCEINTES A ULTRAVIDE ; BRIDE ET ENCEINTE ASSOCIEES**
VERFAHREN ZUR HERSTELLUNG EINES ZWEIKOMPONENTENFLANSCHES FÜR ULTRAVAKUUMGEHÄUSE DURCH REIBRÜHRSCHWEISSEN SOWIE ENTSPRECHENDER FLANSCH UND GEHÄUSE
METHOD FOR PRODUCING, BY FRICTION STIR WELDING, A DUAL-COMPONENT FLANGE FOR ULTRA-VACUUM ENCLOSURES, AND ASSOCIATED FLANGE AND ENCLOSURE

(30) Priorité: 06.09.2013 FR 1358564
(43) Date de publication de la demande: 13.07.2016
(73) Titulaire: Sominex, 14400 Bayeux (FR)
(72) Inventeur: LOZACH, Alain, F-14540 Grentheville (FR)
(74) Mandataire: IP Trust
(86) Numéro de dépôt international: PCT/FR2014/052197
(87) Numéro de publication internationale: WO 2015/033073

(56) Documents cités:
- JP-A- H08 145 257
- JP-A- H10 185 040
- JP-A- 2007 283 376
- US-A1- 2011 000 952

## Description

### Domaine de l'invention

La présente invention concerne le domaine des composants techniques destinés à des enceintes à vide, destinées à des environnements à ultravide, correspondant à des pressions inférieures à 10⁻⁷ millibars. De telles enceintes sont destinées par exemple à des accélérateurs de particules destinées à la recherche scientifique ou à des applications médicales ou industrielles. La présente invention concerne un procédé de réalisation d'une pièce bi-composante étanche et d'une bride pour enceinte à vide conformément au préambule des revendications 1 et 8 (voir par exemple, JP H08 145257 A). Le raccordement d'équipements complémentaires nécessite l'usage de brides de raccordement conçues pour limiter les fuites de manière drastique. Ces brides sont généralement réalisées en acier inoxydable et présentent un système de couteaux interagissant avec un joint métallique malléable pour assurer une parfaite étanchéité.

Dans des environnements ultravide, tout dégazage et toute libération de constituants peut altérer le fonctionnement de l'équipement. En particulier, l'acier inoxydable présente des problèmes liés à la libération d'atomes de carbone pouvant se déposer sur des capteurs présents dans l'enceinte à vide.

L'acier présente également une rémanence élevée lors d'une irradiation, pouvant perturber transitoirement le fonctionnement de l'équipement.

Pour remédier à ces inconvénients, il a été proposé de réaliser certains des équipements complémentaires en aluminium. Néanmoins, la liaison par voie de soudure ou de brasage entre l'acier inoxydable et l'aluminium présente de nombreuses difficultés techniques, liées aux différences de température de fusion des deux métaux, à la formation d'alumine et de composés intermétalliques perturbant la soudure.

### Etat de la technique

Il est connu de réaliser des brides pour enceintes à ultravide par l'assemblage d'un composant en aluminium et un composant en acier inoxydable.

On connaît notamment dans l'état de la technique les brides commercialisées par la société Atlas sous la marque ConFlat (CF), présentant un corps en bride en aluminium avec un couteau d'étanchéité réalisé en acier inoxydable destinée à être soudé sur une chambre d'aluminium. Ces brides bimétalliques de l'art antérieur sont réalisées par une technologie de soudage par explosion

Il est également connu dans l'état de la technique de procéder à la liaison de deux composants métalliques, par un procédé de friction-malaxage.

Le soudage par friction-malaxage a été inventé et breveté en 1991 par Wayne Thomas, au Welding institute (TWI). Il a eu, dès le départ, pour objectif de pallier la plupart des défauts inhérents aux procédés de soudage par fusion, principalement en ce qui concerne l'assemblage de matériaux réputés difficilement soudables, comme certains alliages d'aluminium. Le soudage par friction-malaxage est aujourd'hui de plus en plus utilisé dans divers domaines industriels, et notamment dans l'industrie aéronautique.

La thèse « Soudage par friction-malaxage ; Aluminium ; 2014 T6 ; 6061 T6 »Date de publication soutenue le 13 décembre 2012 à l'université Catholique de Louvain « UCL - SST/IMMC/IMAP - Materials and process » par Bruno de Meester de Betzenbroeck, et Aude Simar accessible sous le lien internet http://dial.academielouvain.be/handle/boreal:120112?site_name= UCL présente la technique de soudage par friction-malaxage. Son contenu est incorporé dans la présente demande de brevet par sa désignation.

La demande de brevet internationale WO200404962 présente un procédé de fabrication de joint d'about par friction-agitation.

Elle concerne deux éléments de liaison de résistance à la déformation à haute température différente sont posés bout à bout. Le sens de rotation d'une sonde d'un élément de liaison est réglé de façon à coïncider avec un sens de rotation R partant de l'élément de liaison présentant une plus faible résistance à déformation à haute température vers l'élément de liaison ayant une résistance à la déformation à haute température plus élevée. La sonde tournante est ensuite introduite dans la partie contiguë des éléments de liaison. Ladite sonde est avancée le long de la partie contiguë en étant introduite dans ladite partie contiguë pour exécuter la liaison par friction-agitation. Le joint d'about qui en résulte présente une force de liaison élevée.

### Inconvénients des solutions de l'art antérieur

Les solutions de l'art antérieur présentent néanmoins l'inconvénient d'une faible connaissance des liaisons soudées en friction malaxage entre deux matériaux très hétérogènes, d'une résistance mécanique insuffisante pour supporter les efforts appliqués sur l'assemblage et d'un niveau d'étanchéité non connu dans le cadre de l'ultra-vide.

En effet, dans le domaine de l'invention qui est celui des brides pour des applications dans l'ultravide, par exemple pour des accélérateurs de particules dans des chambres à vide, il est nécessaire de supporter des éléments de positionnement ou de déviation ou de captation dans le faisceau de particules avec de très fortes contraintes d'étanchéité. Le vide peut atteindre 10⁻¹² millibars et le taux de fuite doit rester très faible, souvent inférieur à 10⁻⁹ millibars.litre par seconde.

En raison des problèmes de rémanence et de migration du carbone que posent les pièces en acier, il est apparu souhaitable de passer à des pièces en aluminium, qui présentent toutefois des problèmes de soudage en raison de la formation d'alumine (oxyde d'aluminium) et de la présence résiduelle d'humidité créant des hétérogénéités et fissures.

La réalisation d'assemblages bimétalliques acier/ aluminium selon les techniques connues de brasage ou de friction pure ne sont pas totalement adaptées car l'aluminium se dilate plus que l'acier.

### Solutions apportée par l'invention

Afin de remédier à cet inconvénient, la présente invention propose une solution consistant à assurer les performances mécaniques non pas par la soudure par friction malaxage, mais par un assemblage mécanique des deux composants de nature métallique différentes, et d'appliquer ensuite une soudure par friction malaxage sur la zone d'interface afin d'assurer l'étanchéification de la liaison, sur un chemin continu et fermé.

A cet effet, l'invention concerne selon son acception la plus générale un procédé de réalisation d'une pièce bi-composants étanche destinée à un équipement soumis à un ultravide tel que défini au préambule de la revendication 1. Selon une première variante, ladite première étape d'assemblage mécanique est constituée par un vissage, lesdits composants présentant chacun une zone filetée complémentaire.

Selon une deuxième variante, ladite première étape d'assemblage mécanique est constituée par un frettage.

Selon une troisième variante, ladite première étape d'assemblage mécanique est constituée par boulonnage ou rivetage. Conformément à l'invention, ladite interface est située entre les épaulements complémentaires prévus sur lesdits composants, l'opération de friction malaxage étant réalisée par pénétration d'un pion à travers le composant le plus malléable pour atteindre l'épaulement du composant le moins malléable, le pion exerçant un effort perpendiculaire à la surface dudit épaulement et se déplaçant selon un chemin fermé défini par ledit épaulement.

Selon une variante, ladite interface tubulaire et située entre les deux composants complémentaires, l'opération de friction malaxage étant réalisée par déplacement d'un pion selon un chemin fermé à l'intersection entre ladite interface tubulaire et un plan perpendiculaire.

De préférence, l'un desdits composants est en acier ou alliage d'acier.

Selon un mode de mise en oeuvre particulier, le pion présente une configuration hélicoïdale avec un pas de vis repoussant la matière vers le fond de la soudure, des facettes plates sur sa périphérie et une conicité.

L'invention concerne également une bride pour enceinte à vide constituée par une pièce présentant un couteau apte à assurer l'étanchéité avec une bride complémentaire lors de l'interaction avec un joint intercalaire malléable telle que définie dans la revendication 8. L'invention concerne aussi une enceinte à vide comprenant une telle bride, voir revendication 9.

### Description détaillée d'un exemple non limitatif de réalisation

La présente invention sera mieux comprise à la lecture de la description qui suit, concernant un exemple non limitatif de l'invention, se référant aux dessins annexés où :
- la figure 1 représente une vue en perspective d'une bride selon l'invention
- la figure 2 représente une vue de face de ladite bride
- la figure 3 représente une vue selon un plan de coupe longitudinal de ladite bride
- la figure 4 représente une vue partielle selon un plan de coupe transversal de la zone de soudage de ladite bride,
- la figure 5 illustre par une vue schématique en coupe la bride bi-métallique selon l'invention,
- la figure 6 montre une photographie par microscope à balayage d'électron à l'interface entre l'aluminium et l'acier de la bride bi-métallique selon l'invention.

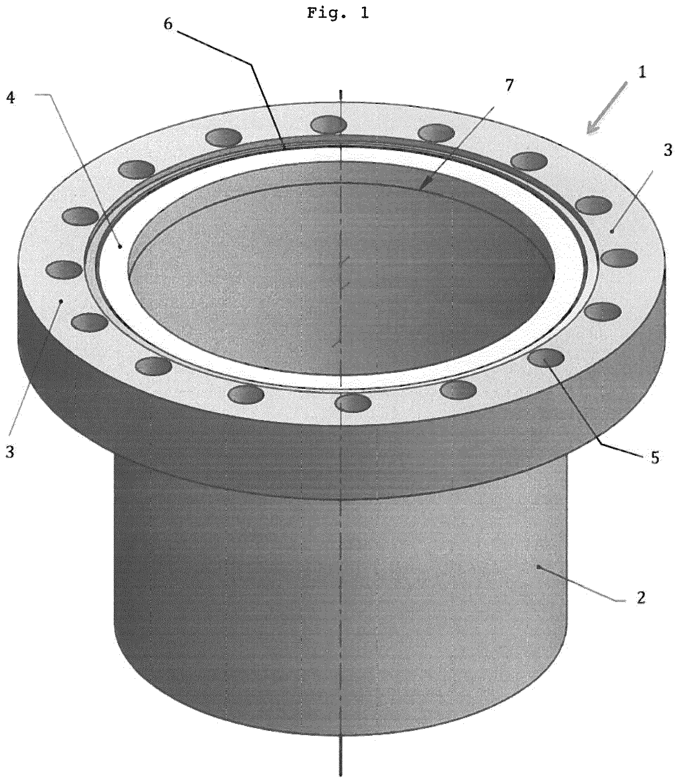

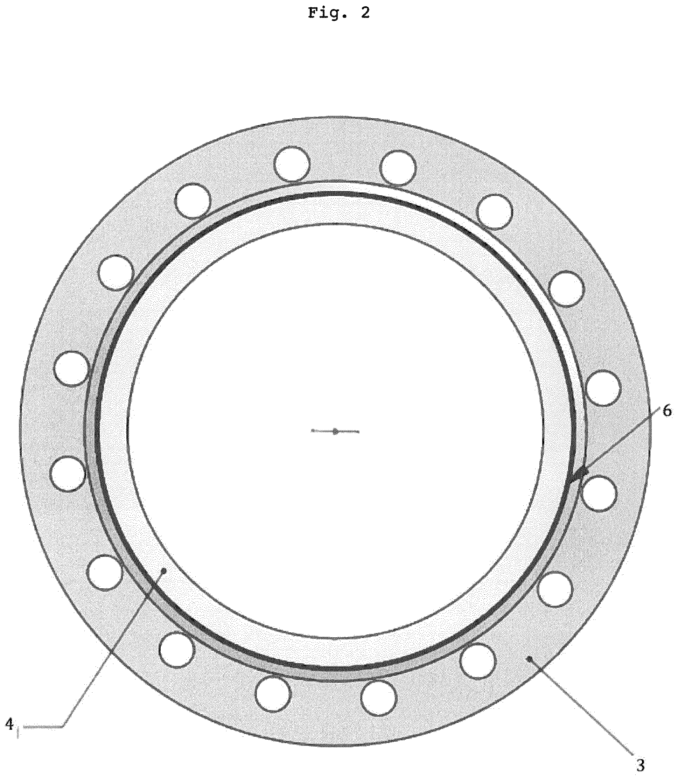

Les figures 1 à 4 représentent une bride (1) pour enceinte à vide destinée à être soudée sur un tube en aluminium (2) au niveau d'une ligne de soudure aluminium-aluminium (7).

Elle est constituée par une pièce bimétallique avec un coeur (4) tubulaire en aluminium et une bordure annulaire périphérique (3) en acier inoxydable. La bordure périphérique (3) présente des perçages (5) pour le passage de boulon de liaison avec une bride complémentaire. Elle présente également un couteau (6) apte à assurer l'étanchéité avec une bride complémentaire lors de l'interaction avec un joint intercalaire malléable.

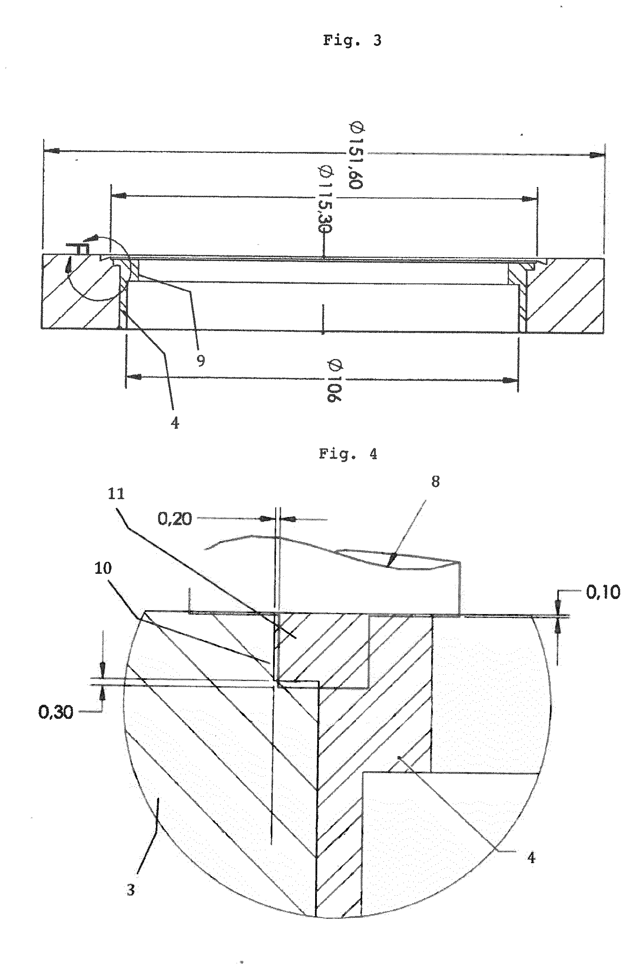

La figure 3 représente une vue en coupe selon un plan longitudinal de la bride.

Le coeur (4) présente un épaulement interne (9) annulaire ainsi qu'un épaulement extérieur (10). La bordure périphérique (3) en acier présente une gorge (11) complémentaire.

Le coeur (4) en aluminium est engagé dans la partie périphérique (3) en acier inoxydable. Cet engagement mécanique peut être réalisé par un vissage, le coeur (4) et la bordure périphérique (3) présentant alors des filetages complémentaires. Il peut aussi être réalisé par un assemblage en force de type « frettage ». L'assemblage est alors réalisé avec des tolérances d'usinage qui interdisent son montage à la main ou même à la presse, par chauffage de la bordure périphérique (3) afin de provoquer une dilatation temporaire permettant de l'enfiler sur le coeur en aluminium (4). On peut également refroidir le coeur (4) en aluminium à l'azote liquide ou à la glace carbonique pour le contracter et l'engager dans la frette. Il peut également être réalisé par un assemblage mécanique classique de type boulonnage ou de rivetage entre le coeur (4) et la périphérie (3).

Après cette première étape d'assemblage, on procède à une seconde étape de soudage par friction-malaxage avec un pion rotatif (8) déplacé selon un chemin continu situé à l'interface entre le coeur (4) et la bordure périphérique (3), pour amener les deux métaux à un état pâteux ou proche de l'état pâteux (400°C pour aluminium, 800°C pour l'acier inoxydable). Cette opération est réalisée à l'aide d'un pion (8) de l'épaisseur du cordon de soudure, présentant une forme à trois facettes avec une légère conicité et éventuellement un pas de vis pour forcer vers le fond de soudure la matière formant un bourrelet et un épaulement appuyant sur ledit bourrelet. Ce pion (8) peut être constitué en acier dur, en carbure de tungstène ou en céramique et est entraîné à une vitesse de rotation d'environ 1500 tours/minute. Il avance en poussant la matière à l'état pâteux pour l'amener dans le trou formé dans son sillage.

Le pion (8) est déplacé au milieu du joint entre les deux parties à souder, sur une zone chevauchant l'épaulement annulaire (11) avec un enfoncement dépassant le fond de la gorge annulaire (10), d'une profondeur d'environ 0,30 millimètres. L'épaulement du pion (8) présente pénètre par ailleurs dans la surface plane située à la jonction entre l'aluminium et l'acier, d'une épaisseur d'environ 0,10 millimètres, afin de contraindre la matière à combler le trou laissé dans son sillage et à favoriser l'échauffement du pion.

Le pion (8) est décrit à titre d'exemple non limitatif. Des pions plus simples fonctionnent aussi, mais avec présente un risque de manque de matière dans le fond de soudure. Cela peut se corriger en donnant de l'angle au pion, qui complexifie toutefois l'usinage.

On traverse l'aluminium pour « frôler » la surface de l'acier et arracher des particules d'acier qui s'amalgament avec l'aluminium pâteux, avec un deuxième assemblage mécanique obtenu par vissage, frettage, boulonnage ou rivetage. La couronne en acier présente un épaulement dont la largeur est la moitié de la section du pion de malaxage.

La largeur de la soudure est de l'ordre de quelques millimètre et sa profondeur est inférieure au millimètre, cela assure l'étanchéité mais que partiellement la tenue mécanique.

L'aluminium est poussé radialement vers l'acier. Eventuellement, l'axe de rotation du pion (8) peut présenter un léger angle (tilt) par rapport à la normale à la surface traitée. Le pion présente optionnellement un pas de vis inversé du pas de vis pour « pousser » la matière et ne pas laisser de lacunes de matière dans le fond de la soudure.

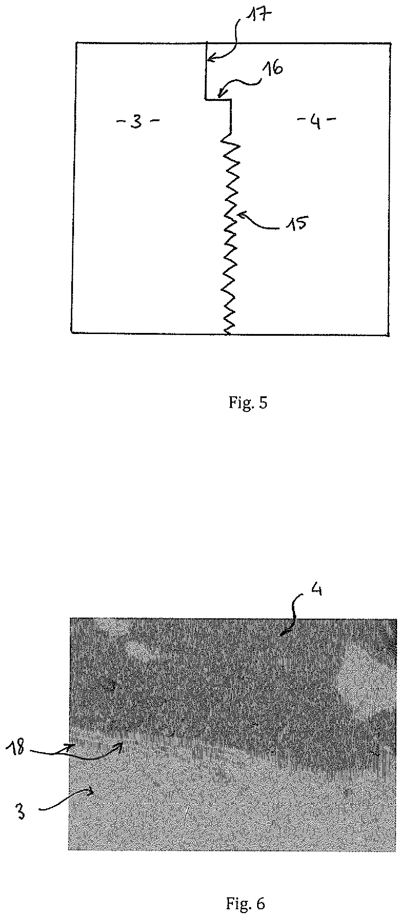

Conformément à la figure 5, l'assemblage mécanique par filetage 15 de la bride et du coeur peut s'effectuer par exemple sur une distance de 15 mm, l'épaulement d'acier 16 sur lequel l'aluminium à l'état pâteux est poussé, peut s'étendre sur une largeur de 2 mm et la paroi verticale d'acier 17 perpendiculaire à l'épaulement peut s'étendre sur une longueur de 2,5 mm. Cette paroi verticale ou inclinée 17 a pour fonction de guider l'aluminium à l'état pâteux sur l'épaulement d'acier 16 pour forcer l'aluminium pâteux à s'insérer entre les aspérités d'acier crées lorsque le pion rotatif frotte la surface de l'épaulement d'acier 16. Le pion pénètre par exemple sur une profondeur de 0,35 mm dans l'acier après avoir traversé une hauteur de 3 mm d'aluminium. La vitesse de rotation du pion est de l'ordre de 1500 tr.min-1.

La figure 6 met en évidence par une photographie réalisée par un microscope à balayage, la formation d'intermétalliques 18 à l'interface entre l'acier et l'aluminium, des particules d'aluminium s'étant immiscées entre les aspérités d'acier crées pour former avec ces particules d'acier une nouvelle phase.

La zone soudée par la technique de friction malaxage par transparence et frottage du pion sur l'épaulement d'acier, présente une grande compacité puisqu'il n'existe aucune lacune de matière au niveau de l'interface entre les deux matériaux.
▪ Le procédé selon l'invention permet ainsi d'effectuer un assemblage d'un alliage d'Aluminium / Acier inoxydable, à la fois mécaniquement résistant et étanche, identiquement à une soudure traditionnelle TIG.

L'étanchéité est réalisée grâce à l'accrochage mécanique résultant de la forme de la surface d'interface et à la présence d'une fine couche d'intermétalliques existante sur l'intégralité de l'interface entre les deux matériaux.

On donne ci-dessous les utilisations possibles de la bride obtenue, des exemples de matériaux constitutifs pour cette bride, et ses caractéristiques importantes :
▪ Utilisation
   ▪ dans les domaines du vide et de l'ultravide (UHV) avec un taux de fuite généralement <10⁻⁹ mbar*l/s et un niveau de vide jusqu'à 10⁻¹⁰ mbar.
▪ Bride DN 100 CF respectant la norme ISO 3669-2.

### Matériaux

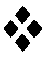 Couteau : Acier Inoxydable 316L
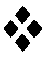 Intérieur de la bride soudable : Aluminium 5083 ou 6060, à la demande.

### Caractéristiques

▪ Taux de fuite : < 1.10-9 mbar*l/s
▪ Températures d'utilisation : entre 0°C et 270 °C
▪ Résistance mécanique de désassemblage > 50000 N
▪ Etanchéité conservée après : efforts en flexion répétés d'une charge de 4000 N à 250 mm pendant 100 cycles et un cyclage thermique entre 20°C et 270°C pendant 10 cycles successifs.

## Revendications

1. Procédé de réalisation d'une pièce bi-composant étanche destinée à un équipement soumis à un ultravide, lesdits composants étant dans des métaux ou des alliages métalliques de nature différents, le procédé étant **caractérisé par** les étapes suivantes :
procéder à une première étape d'assemblage mécanique des deux composants (3, 4) à une deuxième étape de soudure par friction malaxage sur un chemin fermé formée à l'interface des deux composants (3, 4), ladite interface étant située entre des épaulements complémentaires prévus sur lesdits composants (3, 4), l'opération de friction malaxage étant réalisée par pénétration du pion (8) à travers le composant le plus malléable (4) pour atteindre l'épaulement (11) du composant le moins malléable (3), avec un enfoncement dépassant le fond de la gorge annulaire (10) formée par l'épaulement du composant le moins malléable (3), le pion (8) exerçant un effort perpendiculaire à la surface dudit épaulement (11) et se déplaçant selon un chemin fermé défini par ledit épaulement (11) en frottant la surface du composant le moins malléable (3) pour en arracher des particules qui s'amalgament avec le composant le plus malléable (4) à l'état pâteux.

2. Procédé d'assemblage selon la revendication 1 **caractérisé en ce que** ladite première étape d'assemblage mécanique est constituée par un vissage, lesdits composants (3, 4) présentant chacun une zone filetée complémentaire.

3. Procédé d'assemblage selon la revendication 1 **caractérisé en ce que** ladite première étape d'assemblage mécanique est constituée par un frettage.

4. Procédé d'assemblage selon la revendication 1 **caractérisé en ce que** ladite première étape d'assemblage mécanique est constitué par un boulonnage ou un rivetage, lesdits composants (3, 4) présentant des orifices, taraudées ou non, permettant d'insérer des vis ou des rivets.

5. Procédé d'assemblage selon l'une quelconque des revendications précédentes **caractérisé en ce que** ladite interface tubulaire (11) est située entre les deux composants (3, 4) complémentaires, l'opération de friction malaxage étant réalisée par déplacement du pion (8) selon un chemin fermé à l'intersection entre ladite interface tubulaire (11) et un plan perpendiculaire.

6. Procédé d'assemblage selon l'une quelconque des revendications précédentes **caractérisé en ce que** l'un desdits composants (3) est en acier ou alliage d'acier.

7. Procédé d'assemblage selon l'une quelconque des revendications précédentes **caractérisé en ce que** le pion (8) présente une configuration hélicoïdale avec un pas de vis repoussant la matière vers le fond de la soudure, des facettes plates sur sa périphérie et une conicité.

8. Bride (1) pour enceinte à vide constituée par une pièce présentant un couteau apte à assurer l'étanchéité avec une bride complémentaire lors de l'interaction avec un joint intercalaire malléable, cette bride (1) étant formée de deux composants (3, 4) métalliques de nature différente **caractérisé en ce que** les deux composants (3, 4) sont assemblés d'une part par une liaison mécanique et d'autre part par une zone de raccordement soudée par friction-malaxage située sur une interface disposée entre des épaulements complémentaires prévus sur lesdits composants et agencés de sorte que l'opération de friction malaxage soit réalisée par pénétration du pion (8) à travers le composant le plus malléable (4) pour atteindre l'épaulement (11) du composant le moins malléable (3), avec un enfoncement dépassant le fond de la gorge annulaire (10) formée par l'épaulement (11) du composant le moins malléable (3).

9. Enceinte à vide comprenant une bride (1) selon la revendication 8.

## Patentansprüche

1. Verfahren zur Herstellung eines undurchlässigen Zweikomponententeils für ein Gerät, das unter Ultravakuum steht, wobei die Komponenten aus verschiedenartigen Metallen oder Metalllegierungen bestehen, wobei das Verfahren durch die folgenden Schritte gekennzeichnet ist:
Durchführen eines ersten Schrittes des mechanischen Zusammenfügens der beiden Komponenten (3, 4), eines zweiten Schrittes des Rührreibschweißens entlang einer geschlossenen Fügelinie, die an der Grenzfläche der beiden Komponenten (3, 4) gebildet wird, wobei die Grenzfläche zwischen den ergänzenden Schultern gelegen ist, mit welchen die Komponenten (3, 4) versehen sind, wobei der Vorgang des Rührreibens durchgeführt wird, indem ein Zapfen (8) die leichter verformbare Komponente (4) durchdringt, um die Schulter (11) der weniger leicht verformbaren Komponente (3) zu erreichen, wobei das Eindringen derart erfolgt, dass es über Boden der ringförmigen Vertiefung (10) hinausgeht, welche von der Schulter der weniger leicht verformbaren Komponente (3) gebildet wird, wobei der Zapfen (8) im rechten Winkel zur Oberfläche der Schulter (11) eine Kraft ausübt und gemäß einer geschlossenen Fügelinie vorgeschoben wird, die von der Schulter (11) begrenzt wird, wobei er an der Oberfläche der weniger leicht verformbaren Komponente (3) reibt, um derselben Partikel zu entreißen, die sich mit der leichter verformbaren Komponente (4) vermischen, welche im erweichten Zustand vorliegt.

2. Fügeverfahren nach Anspruch 1, **dadurch gekennzeichnet, dass** der erste Schritt des mechanischen Zusammenfügens darin besteht, dass die Komponenten (3, 4), welche jeweils komplementäre Gewindebereiche aufweisen, verschraubt werden.

3. Fügeverfahren nach Anspruch 1, **dadurch gekennzeichnet, dass** der erste Schritt des mechanischen Zusammenfügens in einem Schrumpfverbindung besteht.

4. Fügeverfahren nach Anspruch 1, **dadurch gekennzeichnet, dass** der erste Schritt des mechanischen Zusammenfügens in einem Verbinden mittels Bolzen oder Nieten besteht, wobei die Komponenten (3, 4) Bohrungen aufweisen, welche mit einem Gewinde versehen sind oder nicht und in welche Schrauben oder Nieten eingebracht werden können.

5. Fügeverfahren nach einem beliebigen der vorhergehenden Ansprüche, **dadurch gekennzeichnet, dass** die röhrenförmige Grenzfläche (11) zwischen den beiden sich ergänzenden Komponenten (3, 4) gelegen ist, wobei der Rührreibvorgang durchgeführt wird, indem der Zapfen (8) gemäß einer geschlossenen Fügelinie vorgeschoben wird, an der Schnittstelle zwischen der röhrenförmigen Grenzfläche (11) und einer dazu rechtwinkligen Ebene.

6. Fügeverfahren nach einem beliebigen der vorhergehenden Ansprüche, **dadurch gekennzeichnet, dass** eine (3) der Komponenten aus Stahl oder Stahllegierung ist.

7. Fügeverfahren nach einem beliebigen der vorhergehenden Ansprüche, **dadurch gekennzeichnet, dass** der Zapfen (8) eine spiralförmige Konfiguration hat, mit einem Gewinde, welches die Materie zum Boden der Schweißverbindung schiebt, mit ebenen Flächenstücken in seinem Randbereich und mit einer kegelförmigen Gestalt.

8. Flansch (1) für Vakuumkammern, welcher aus einem Teil besteht, das eine Schneidkante aufweist, die dazu geeignet ist, mit einem komplementären Flansch die Abdichtung zu gewährleisten, wenn es zu einer Wechselwirkung mit einer verformbaren Flachdichtung kommt, wobei dieser Flansch (1) aus zwei verschiedenartigen metallischen Komponenten besteht, **dadurch gekennzeichnet, dass** die beiden Komponenten (3, 4) einerseits durch eine mechanische Verbindung zusammengefügt werden und andererseits durch einen Verbindungsbereich, der durch Rührreiben verschweißt ist und sich an einer Grenzfläche befindet, die zwischen den sich ergänzenden Schultern angeordnet sind, mit welchen die Komponenten versehen sind und welche derart angeordnet sind, dass der Vorgang des Rührreibens durchgeführt wird, indem der Zapfen (8) die leichter verformbare Komponente (4) durchdringt, um die Schulter (11) der weniger leicht verformbaren Komponente (3) zu erreichen, wobei das Eindringen derart erfolgt, dass es über Boden der ringförmigen Vertiefung (10) hinausgeht, welche von der Schulter (11) der weniger leicht verformbaren Komponente (3) gebildet wird.

9. Vakuumkammer, die einen Flansch (1) nach Anspruch 8 umfasst.

## Claims

1. A manufacturing method of a watertight two-component part for an equipment subjected to an ultrahigh vacuum, said components being in metals or metallic alloys of different types, the method being **characterized by** the following steps:
implement a first step of mechanical assembly of the two components (3, 4), a second step of friction stir welding on a closed path formed at the interface of the two components (3, 4), said interface being located between complementary shoulders provided on said components (3, 4), the friction stir operation being made by penetrating the slug (8) through the most malleable component (4) in order to reach the shoulder (11) of the least malleable component (3), with a dent projecting beyond the bottom of the annular groove (10) formed by the shoulder of the least malleable component (3), the slug (8) exerting a force perpendicular to the surface of said shoulder (11) and moving along a closed path defined by said shoulder (11) by rubbing the surface of the least malleable component (3) to tear away from it particles which are amalgamated with the most malleable component (4) in the pasty state.

2. An assembly method according to claim 1, **characterized in that** said first step of mechanical assembly is formed by screwing, said components (3, 4) having each a complementary threaded area.

3. The assembly method according to claim 1, **characterized in that** said first step of mechanical assembly is formed by a bracing.

4. The assembly method according to claim 1, **characterized in that** said first step of mechanical assembly is formed by bolting or riveting, said components (3, 4) having orifices, tapped or not, allowing the insertion of screws or rivets.

5. The assembly method according to any one of the preceding claims, **characterized in that** said tubular interface (11) is located between the two components (3, 4) complementary, the friction stir operation being made by moving the slug (8) along a closed path at the intersection between said tubular interface (11) and a perpendicular plane.

6. The assembly method according to any one of the preceding claims, **characterized in that** one of said components (3) is made of steel or steel alloy.

7. The assembly method according to any one of the preceding claims, **characterized in that** the slug (8) has a helical configuration with a screw pitch repelling the matter towards the bottom of the weld, flat facets on its periphery, and a taper.

8. A flange (1) for a vacuum vessel formed by a part having a knife capable of waterproofing with a complementary flange when interacting with a malleable interlayer joint, said flange (1) being formed of two metallic components (3, 4) of different types, **characterized in that** the two components (3, 4) are assembled on the one hand by a mechanical connection and on the other hand by a connection area welded by friction stir located on an interface arranged between complementary shoulders provided on said components and arranged so that the friction stir operation is made by penetrating the slug (8) through the most malleable component (4) in order to reach the shoulder (11) of the least malleable component (3), with a dent projecting beyond the bottom of the annular groove (10) formed by the shoulder (11) of the least malleable component (3).

9. A vacuum vessel comprising a flange (1) according to claim 8.
